# NEUE EUROPÄISCHE PATENTSCHRIFT

(11) **EP 1 885 558 B2**
(45) Veröffentlichungstag und Bekanntmachung des Hinweises auf die Entscheidung über den Einspruch: **20.02.2013**
(45) Hinweis auf die Patenterteilung: 03.02.2010
(21) Anmeldenummer: 06742982.9
(22) Anmeldetag: 18.05.2006
(51) Int. Cl.: B32B 27/32, B32B 27/08, B65D 65/40, B29C 55/16

(54) **COEXTRUDIERTE MEHRSCHICHTIGE BARRIEREFOLIE MIT WENIGSTENS EINER FOLIENLAGE AUS ETHYLEN-VINYLALKOHOL-COPOLYMERISAT (EVOH), VERFAHREN ZU IHRER HERSTELLUNG UND IHRE VERWENDUNG**
COEXTRUDED MULTI-LAYER BARRIER FILM HAVING AT LEAST ONE FILM PLY OF ETHYLENE-VINYL ALCOHOL COPOLYMER (EVOH), METHOD OF PRODUCING IT, AND ITS USE
FEUILLE-BARRIERE MULTICOUCHE COEXTRUDEE COMPORTANT AU MOINS UNE COUCHE DE FEUILLE A BASE DE COPOLYMERE ETHYLENE-ALCOOL VINYLIQUE (EVOH), SON PROCEDE DE PRODUCTION, ET SON UTILISATION

(30) Priorität: 02.06.2005 DE 102005025472
(43) Veröffentlichungstag der Anmeldung: 13.02.2008
(73) Patentinhaber: Brückner Maschinenbau GmbH, 83313 Siegsdorf (DE)
(72) Erfinder: ENZINGER, Helmut, 83313 Siegsdorf (DE); LUND, Roland, 83236 Übersee (DE)
(74) Vertreter: Kopp, Stephan
(86) Internationale Anmeldenummer: PCT/EP2006/004726
(87) Internationale Veröffentlichungsnummer: WO 2006/128589

(56) Entgegenhaltungen:
- EP-A- 0 133 188
- EP-A- 0 311 293
- EP-A- 0 688 667
- EP-A- 1 059 163
- EP-A1- 0 115 163
- EP-A1- 0 380 123
- EP-A2- 0 236 099
- WO-A1-00/37253
- DE-A1- 2 952 509
- GB-A- 2 246 741
- US-A- 4 294 935
- US-A- 4 561 920
- US-A- 4 853 602
- US-A- 5 759 648
- US-A1- 2003 211 298

## Beschreibung

Die vorliegende Erfindung betrifft eine Barrierefolie für Verpackungszwecke, insbesondere für die Verpackung von Lebens- und Genussmitteln und anderen empfindlichen Waren, in Form einer Mehrschichtfolie, deren mechanische Eigenschaften weitgehend von einer biaxial orientierten Folie bestimmt werden, für die als folienbildendes Polymer ein kristallisierbares Polyolefin verwendet wird, und die außerdem als funktionale Schicht oder Barriere wenigstens eine coextrudierte Schicht aus Ethylen-Vinylalkohol-Copolymeren (EVOH) aufweist.

Die Erfindung betrifft ferner ein Verfahren zur Herstellung einer solchen Folie, sowie die Verwendung einer solchen Folie für Verpackungszwecke, insbesondere für die Verpackung von Lebens- und Genussmitteln, wobei die hervorragenden optischen Eigenschaften, Festigkeitseigenschaften, Barriereeigenschaften sowie gegebenenfalls Schrumpfeigenschaften der Folie genutzt werden.

Verpackungen auf der Basis von Kunststofffolien sind aus dem modernen Leben nicht mehr wegzudenken. Je nach den zu verpackenden Waren werden an derartige Kunststofffolien verschiedenartige Anforderungen gestellt. Bei Kunststofffolien für die Verpackung von Lebens- und Genussmitteln stehen dabei Eigenschaften im Vordergrund, die die Haltbarkeit des verpackten Lebens- oder Genussmittels auf den Vertriebswegen und beim Endverbraucher bis zum Verbrauch des Lebensmittels sichern.

Wenn an die Verpackungsfolien hohe Anforderungen gestellt werden, sind im Lebensmittel- und Genussmittelbereich heute häufig Folien auf Polyesterbasis (PET; Polyethylenterephthalat) im Einsatz, die eine gute Festigkeit, gute optische Eigenschaften und eine gute Beschichtbarkeit für glänzende Metallfilme, insbesondere aus Aluminium, oder für durchsichtige Keramikbeschichtungen, insbesondere aus SiOx oder AlOx, aufweisen. Die dünnen Metall- oder Keramikfilme verleihen den Folien hohen Anforderungen genügende Barriereeigenschaften, insbesondere im Hinblick auf die Durchlässigkeit für Wasserdampf (Water Vapor Transmission Rate; WVTR; gemessen in g/ (m²d) bzw. g/ (m²24h) ; ASTM E 96) und für Sauerstoff (Oxygen Transmission Rate; OTR, gemessen in cm³/ (m²dbar) bzw. cm³/ (m²24h) bei einem Atmosphärendruck von 1 bar; ASTM 3985). Um die für die Verpackungsherstellung erforderliche Verschweißbarkeit bzw. Versiegelbarkeit der Folien zu gewährleisten, weisen sie üblicherweise noch eine zusätzliche äußere Polyolefinschicht auf, beispielsweise eine über der Metallisierung oder Keramikbeschichtung vorgesehene Polyethylenschicht, beispielsweise aus HDPE oder LDPE. Obwohl diese Polyesterfolien hohen Qualitätsanforderungen genügen, weisen sie doch u.a. den Nachteil auf, dass Polyesterpolymere relativ teuer sind und eine relativ hohe Dichte aufweisen.

Es wird daher versucht, statt auf offline beschichtete BOPET-Folien mit PVDC (Polyvinylidenchlorid) oder SiOx auf inline coextrudierte Polyolefinfolien zurück zu greifen, insbesondere auf Polypropylenfolien. Solche Folien sind - auch als Barrierefolien - vergleichsweise billig herstellbar. Um mit den zwar teureren, jedoch qualitative hochwertigen BOPET-Folien konkurrieren zu können, dürfen Polyolefinfolien jedoch weder bei den optischen und Festigkeitseigenschaften, noch hinsichtlich der Barriereeigenschaften wesentliche Nachteile aufweisen.

Es ist bekannt, dass in Barrierefolien Polyolefinschichten, z.B. Schichten auf der Basis von Polyethylen, Polypropylen oder von deren Copolymeren auch mit anderen Olefinen, mit Schichten aus Ethylen-Vinylalkohol-Copolymeren (EVOH), die für gute Barriereeigenschaften bekannt sind, kombiniert werden können. Es ist ferner bekannt, dass EVOH-Schichten vorzugsweise beidseitig von Polyolefinschichten gegen die Umgebung abgeschirmt werden, da sich ihre Barriereeigenschaften beim Zutritt von Luftfeuchtigkeit verschlechtern, weshalb EVOH-Schichten normalerweise im Kern einer mehrschichtigen Folie angeordnet werden.

Normalerweise gilt ferner, dass sich die Barriereeigenschaften einer EVOH-Schicht verbessern, wenn der molare Gehalt an Vinylalkoholgruppen im EVOH-Copolymeren gegenüber dem Gehalt an Ethylengruppen möglichst hoch ist. Mit einem steigenden Gehalt polarer Vinylalkoholgruppen im Copolymer steigt jedoch auch die Unverträglichkeit gegenüber unpolaren Polymeren wie Polyolefinen.

Es ist ferner bekannt, dass durch biaxiales Verstrecken (biaxiales Orientieren) die mechanischen und optischen Eigenschaften von Polyolefinfolien verbessert werden, und dass das biaxiale Verstrecken auch die Barriereeigenschaften von EVOH-Barriereschichten verbessert.

Es ist jedoch ebenfalls bekannt, dass Polyolefinschichten, insbesondere Polypropylenschichten, und EVOH-Schichten im direkten Kontakt schlecht aneinander haften und eine schlechte Verträglichkeit aufweisen, und die unterschiedlichen Schichten beim Verstrecken in unterschiedlicher Weise kristallisieren und ihre gewünschten optimalen Eigenschaften unter unterschiedlichen Bedingungen ausbilden. Um die Verträglichkeit der Schichten zu verbessern, ist es daher bekannt, besondere Zwischenschichten, in der Regel aus besonderen modifizierten Polyolefinen, vorzusehen, die als Haftschichten wirken und auch das gemeinsame Verstrecken von Polyolefin- und EVOH-Schichten erleichtern bzw. in gewissen Fällen überhaupt erst ermöglichen.

Trotzdem muss beim biaxialen Orientieren von mehrschichtigen Polyolefinfolien mit EVOH-Barriereschichten weiterhin ein Ausgleich für gegenläufig wirkende Effekte gefunden werden, da sich optimale optische und Festigkeitseigenschaften und gute Barriereeigenschaften unter unterschiedlichen Bedingungen ausbilden. Der relevante Stand der Technik zeigt diese Problematik und verfolgt unterschiedliche Strategien, um mehrschichtige Polyolefinfolien mit EVOH-Barrieren herzustellen, die im Hinblick auf die erzielbaren gewünschten Eigenschaften einen möglichst guten Kompromiss darstellen.

So beschreibt US-A-4,561,920 ein Verfahren, bei dem eine mehrschichtige Primärfolie mit einer EVOH-Kernschicht und zwei Polyolefin-Außenschichten sequentiell biaxial verstreckt wird, indem zuerst in Längsrichtung (machine direction; MD) im Temperaturbereich von etwa 130°C bis 140°C verstreckt wird, und danach, unter veränderten Temperaturbedingungen im Bereich von etwa 150 bis 160°C, in Querrichtung (transversal direction; TD). Das erzielte Flächenreckverhältnis liegt im Bereich einer relativ geringen Flächenzunahme von nur 6 (2 mal 3) bis 28 (4 mal 7). Es wird ferner angegeben, dass EVOH-Copolymere mit einem Ethylengehalt von 25 bis 75 mol% zwar generell bekannt sind, dass jedoch für die Zwecke des biaxialen Verstreckens von Barrierefolien EVOH mit einem molaren Ethylengehalt von mindestens 45 mol% zu verwenden ist, damit das EVOH eine ausreichende Flexibilität für das Verstrecken aufweist. Es wurden mehrschichtige Folien erhalten, die bei 20°C und 0% relative Luftfeuchtigkeit eine Sauerstoffdurchlässigkeit (OTR) im Bereich von 12 bis 13 cm³/m²d aufwiesen.

In EP-A-0 311 293 wird ein ähnliches Verfahren beschrieben, bei dem eine ähnliche Folie ebenfalls biaxial sequentiell mit einer höheren Flächenzunahme auf das 35- bis 70-fache verstreckt wird, wobei das Verstrecken in MD bei Temperaturen im Bereich von 140 bis 150°C und in TD im Bereich von 160 bis 170°C erfolgt. Wieder wird angegeben, dass der Ethylengehalt im EVOH-Copolymer mindestens 45% betragen soll, damit beim Verstrecken befriedigende Ergebnisse erhalten werden.

In EP-A-0 688 667 wird in allgemeiner Form vorgeschlagen, das Verstrecken einer mehrschichtigen Folie auf Polypropylenbasis mit EVOH-Barriereschicht vergleichbaren Typs mit einer Flächenvergrößerung auf das 49 bis 64-fache als simultanes Recken durchzuführen, wobei allerdings kein einziges Ausführungsbeispiel beschrieben wird und auch nicht erläutert wird, was unter "simultanem Recken" zu verstehen ist, unter welchen Bedingungen ein solches Recken durchzuführen ist, und was für Polymerqualitäten für die einzelnen Schichten zu verwenden sind. Desgleichen fehlen genauere Angabe zur Folienqualität. Insgesamt offenbart EP-A-0 688 667 daher dem Fachmann keine konkrete nacharbeitbare Lehre.

Versucht man, ausgehend vom Wissen des einschlägigen Fachmanns, dass zum biaxialen Recken von Polypropylen mit Flächenreckverhältnissen im Bereich von 49 bis 64 bestimmte Recktemperaturen einzuhalten sind, im bekannten geeigneten Temperaturfenster entsprechend den Angaben in der EP-A-0 688 667 eine mehrschichtige Folie auf Polypropylenbasis mit einer EVOH-Kernschicht, bei der der molare Ethylenanteil unter 40 mol% liegt, simultan biaxial zu orientieren, wird ein Aufreißen der EVOH-Schicht (Ausbildung einer Netzstruktur) aufgrund dehnungsinduzierter Kristallisation beobachtet. Wenn die EVOH-Schicht aufreißt, können zwangsläufig keine guten Barriereeigenschaften mehr gewährleistet werden, und die Folienqualität ist insgesamt unzureichend. Eine Verstreckung wie in EP-A-0 688 667 unter Heranziehung üblicher Verstreckungsparameter führte in diesem Falle bezüglich der Optik und Barriere zu unbrauchbaren Folien.

EP-A-0 758 675 beschreibt bestimmte modifizierte Polyolefine, die als Haftvermittler auch zwischen EVOH- und Polyolefinschichten geeignet sind. In einem Beispiel wird eine mehrschichtige Testfolie mit einer Polypropylenschicht mit einem geringen Ethylenanteil, einer erfindungsgemäßen Haftvermittlerschicht und einer EVOH-Schicht mit einem Ethylengehalt von 44 mol% zur Prüfung der Haftfestigkeit sequentiell bei 80°C mit einer nur 9fachen Flächenzunahme gereckt. Außer Angaben zur Haftung werden keinerlei Angaben zu sonstigen Eigenschaften der Testfolien gemacht.

Zwei jüngere Patentanmeldungen (WO 00/37253 A1 und WO 2004/050353 A2) beschreiben ebenfalls die biaxiale Orientierung von mehrschichtigen Polyolefinfolien mit innenliegenden EVOH-Barriereschichten.

WO 00/37253 beschreibt eine thermoplastische mehrschichtige biaxial orientierte Schrumpffolie. Die Mittelschicht besteht aus einem Ethylen-Vinylalkohol-Copolymerisat, während die Außenschichten aus Polyethylen-Homo- oder Copolymeren bestehen. Die mehrschichtige Folie wird simultan verstreckt, wobei Reckverhältnisse sowohl in MD als auch in TD von über 4 bevorzugt werden. In den Beispielen betragen die Reckverhältnisse MD x TD 4,5 x 4,5 bzw. 5 x 5, was Flächenzunahmen beim Verstrecken auf das 20,25fache bzw. 25fache entspricht.

Durch die Verwendung von Polyethylen-Homo- oder Copolymeren in den Außenschichten ist es nicht möglich, eine thermostabilisierte Folie herzustellen, und die offenbarten Verfahrensbedingungen sind nicht direkt auf die Verarbeitung von Folien auf Polypropylenbasis übertragbar. Ferner wird zwar allgemein angegeben, dass EVOH-Qualitäten mit Ethylengehalten im Bereich von etwa 28 bis etwa 48 mol% verwendbar sind. In allen Beispielen wird jedoch, wie im vorbekannten Stand der Technik, ausschließlich ein EVOH mit 44 mol% Ethylenanteil verwendet.

WO 2004/050353 beschreibt die Herstellung einer mehrschichtigen biaxial sequentiell verstreckten Folie aus einem Verbund aus Polypropylen, Haftvermittler und EVOH.

Der Verbund wird in Schmelzenform in Form von Schichten gleicher Breite coextrudiert. Anschließend wird die Folie zuerst in Längsrichtung (MD) und danach in Querrichtung (TD) mittels eines Kluppenrahmens verstreckt, wobei die Temperatur beim Verstrecken in MD im Bereich vom 110 bis 165°C, insbesondere von 140 bis 160°C liegt, und in MD im Bereich von 130 bis 180°C, vorzugsweise von 140 bis 180°C. Es wird als erfindungswesentlich bezeichnet, dass die Kluppen des Rahmens bei der Querverstreckung alle 5 Schichten gemeinsam und gleichzeitig ergreifen. Wird nur die EVOH-Schicht ergriffen, reißt die EVOH-Schicht auf und die Folie wird unbrauchbar. Die Enddicke der EVOH Schicht der hergestellten Folie mit der besten beschriebenen Sauerstoffbarriere von ca. 5cm³/m²d bei 23°C und 50% Luftfeuchte beträgt etwa 5 µm, wobei ein EVOH-Copolymer mit einem Ethylenanteil von 44 mol% verwendet wurde.

Die Aufgabe der vorliegenden Erfindung besteht darin, eine verbesserte Barrierefolie auf der Basis biaxial orientierter Polyolefinschichten mit mindestens einer EVOH-Barriereschicht sowie ein Verfahren zu deren Herstellung zur Verfügung zu stellen, wobei die Folie zusätzlich zu den bekannten vorteilhaften Eigenschaften orientierter Polypropylenfolien verbesserte Barrierewerte insbesondere gegenüber Sauerstoff und Aromastoffen aufweisen soll, indem die vorteilhaften Barriereeigenschaften von EVOH-Copolymeren mit einem erniedrigten molaren Gehalt an Ethylen voll ausgenutzt werden können, und wobei die erfindungsgemäßen Folien gleichzeitig klare und glänzende Verpackungsfolien der gewünschten Festigkeit und mit einer hervorragenden Undurchlässigkeit gegenüber Sauerstoff, Wasserdampf, Aromen und Gerüchen sein sollen.

Diese Aufgabe wurde gelöst durch eine Folie, die mit ihren Grundmerkmalen und bevorzugten Merkmalen in den Ansprüchen 1 bis 15 charakterisiert wird, Verfahren zur Herstellung einer solchen Folie mit den Hauptmerkmalen gemäß den Ansprüchen 16 und 17, und die Verwendung einer solchen Folie gemäß den Ansprüchen 18 und 19.

Nachfolgend wird die vorliegende Erfindung noch näher erläutert, wobei ergänzend darauf hinzuweisen ist, dass der eingangs diskutierte Stand der Technik auch zur Feststellung des Fachwissens eines Durchschnittsfachmanns herangezogen werden kann.

In der Regel umfassen Mehrschichtfolien mindestens eine die wesentlichsten mechanischen Eigenschaften bestimmende Trageschicht aus einem filmbildenden Haupt-Polymer, außen oder innen liegende Barrieren für die Erreichung der gewünschten Barriere-Eigenschaften, sowie Außenschichten, die die Bedruckbarkeit, die Beschichtbarkeit oder die Siegelfähigkeit, die zur Herstellung geschlossener Verpackungen oder von Laminaten erforderlich ist, gewährleisten.

Im Rahmen der vorliegenden Erfindung wurde folgende siebenschichtige Anordnung mit der Verteilung der Schichten A/B/C/D/C/B/E gewählt, wobei die einzelnen Schichten A, B, C, D und E nachfolgend noch im einzelnen näher erläutert werden.

Die Schicht D ist die zentrale innere Barriereschicht und besteht aus einem Ethylen-Vinylalkohol-Copolymer (EVOH). Beidseitig angrenzend an die EVOH Barriereschicht D sind je eine Haftvermittlerschicht C aus einem modifizierten Polyolefin, insbesondere einem modifizierten Polypropylen, aufgebracht. Angrenzend an die Haftvermittlerschicht C ist eine Strukturschicht B aus einem teilkristallinen thermoplastischen Polyolefin oder einem Blend aus teilkristallinen thermoplastischen Polyolefinen aufgebracht, die im Hinblick auf die zu ihrer biaxialen Verstreckung erforderlichen Temperaturbedingungen besonders ausgewählt bzw. modifiziert wurden und vorzugsweise ebenfalls Materialien auf Polyolefinbasis sind. Die äußeren Schichten A und E bestehen ebenfalls aus teilkristallinen thermoplastischen Polyolefinen, für die allerdings das Auswahlkriterium ihre Oberflächeneigenschaften nach dem biaxialen Verstrecken ist.

Der Schichtverbund wird auf an sich bekannte Weise so hergestellt, dass die mehrschichtige Schmelze durch eine Flachdüse coextrudiert und die dabei erhaltene mehrschichtige Schmelze zu ihrer Verfestigung auf eine Kühlwalze gegossen wird. Anschließend wird die Folie mittels einer simultanen Reckanlage verstreckt.

Das bevorzugte Verfahren zur Durchführung des simultanen Reckens ist das Recken der Folie als Flachfolie auf einer simultanen Reckanlage mit Linearmotorbetrieb (LISIM®). Die weniger vorteilhaften Verfahren des simultanen Reckens mit einer mechanischen simultanen Reckanlage (MSO; Mechanical Simultaneous Orienter; mit Kettenbetrieb) und der Herstellung als Schlauchfolie mit einem Recken nach dem BUBBLE oder DOUBLE BUBBLE-Verfahren sollen jedoch vom Bereich der Erfindung ebenfalls umfasst sein.

Im Rahmen der Untersuchungen, die zur vorliegenden Erfindung führten, wurde gefunden, dass sich Mehrlagenverbunde mit einem EVOH-Copolymer mit einem Ethylengehalt von 44 mol% und 48 mol% bei für die simultane Verstreckung von BOPP-Folien typischen Einstellungen ohne Probleme simultan verstrecken ließen, dass dabei aber Folien mit unbefriedigenden OTR-Werten erhalten wurden. Die wahren Streckverhältnisse bei diesen Versuchen lagen in MD bei 8 zu 1 und in TD bei 5,5 zu 1. Die eingestellten Temperaturen betrugen in der Vorheizzone zwischen 166°C und 178°C und in der Reckzone zwischen 155°C bis 160°C, d.h. sie entsprachen typischen Temperaturbedingungen zur Herstellung von BOPP-Folien. Die abschließende Thermofixierung wurde bei 165°C durchgeführt.

Die Mehrlagenverbunde mit einem EVOH-Copolymer mit einem Ethylengehalt von 44 mol% und 48 mol% waren hochtransparent und zeigten keine sichtbaren Strukturen, waren jedoch für kritische Anwendungen viel zu stark sauerstoffdurchlässig.

Mehrlagenverbunde unter Verwendung von EVOH mit einem Ethylengehalt von 27-38 mol% in der Barriereschicht, die unter den o.g. üblichen Bedingungen hergestellt wurden, wiesen dagegen eine starke Netzstruktur auf, die anzeigt, dass die Integrität der EVOH-Barriereschicht beim Versuch des biaxialen simultanen Reckens zerstört wurde. Unter üblichen Reckbedingungen konnten daher keine qualitativ hochwertigen Barrierefolien hergestellt werden.

Für qualitativ hochwertigen Barrierefolien werden Kennwerte im Bereich der folgenden Parameterbereiche für die wichtigsten Barriereeigenschaften und mechanischen und optischen Eigenschaften angestrebt:

Die Sauerstoffdurchlässigkeit (OTR; ASTM 3985) bei 23°C und 75% Luftfeuchtigkeit der Folie sollte weniger als 5 cm³/(m²dbar) betragen, und die Dicke der EVOH-Barriereschicht sollte bei weniger als 2 µm liegen. Die Summe der E-Module (ASTM D 822) sollte in Längs- und Querrichtung 2000 N/mm² übersteigen, und die Zugfestigkeit (ASTM D 822) sollte in Längs- und Querrichtung 300 N/mm² übersteigen. Der Glanz (ASTM 2457) sollte über 80 liegen, und die Trübung (ASTM 1003) sollte unter 5% liegen. Die Folien dürfen ferner keine Netzstruktur aufweisen.

Überraschenderweise stellten die Erfinder fest, dass eine solche Folie erhalten werden kann, wenn man die simultane Verstreckung bei Temperaturen unter 145°C durchführt, indem man insbesondere das Material für die Schichten B entsprechend wählt. Unter diesen Reckbedingungen können Mehrschichtfolien mit einer EVOH-Barriereschicht mit einem Ethylengehalt unter 40 mol% mit den angestrebten Folieneigenschaften, insbesondere mit hervorragenden OTR-Werten von 5 cm³/m²dbar und weniger, erhalten werden. Beim simultanen biaxialen Recken werden Dehngeschwindigkeiten von mehr als 50%/s, vorzugsweise mehr als 300%/s angewandt, um ein Aufreißen (Ausbildung einer Netzstruktur) der EVOH-Schicht zu unterbinden

Entgegen der Lehre von WO 2004/050353 ist es bei dem erfindungsgemäßen Verfahren, das ein simultanes Recken bei relativ niedrigen Temperaturen beinhaltet, nicht erforderlich, alle Schichten der Mehrlagenfolie in gleicher Breite zu extrudieren und beim Recken gemeinsam mit den Kluppen zu greifen. Es hat sich vielmehr gezeigt, dass auch mit der an sich bekannten und grundsätzlich wirtschaftlich vorteilhaften Freirandtechnik gearbeitet werden kann. Es hat sich ferner gezeigt, dass eine große Bandbreite von Flächenreckverhältnissen zur Anwendung kommen kann, die je nach Wunsch auch Werte von 64 überschreiten können oder unter 49 liegen können. Ferner sind die Barrierefolien auch als Schrumpffolien mit maßgeschneiderten Schrumpfeigenschaften herstellbar.

Erklären lässt sich die erfindungsgemäß beobachtete Verstreckbarkeit ohne Bildung einer Netzstruktur in der und angrenzend an die EVOH-Barriereschicht durch eine Unterdrückung dehnungsinduzierter Phasenumwandlungen und Kristallisationsvorgänge während des Verstreckens bei Temperaturen unter 145°C.

Nachfolgend werden beispielhaft verschiedene geeignete Zusammensetzungen unter Bezugnahme auf den Aufbau A/B/C/D/C/B/E für die einzelnen Schichten noch näher beschrieben:

### Innere EVOH-Barriereschicht D:

Die innere Schicht D besteht aus EVOH-Copolymer.

EVOH-Copolymere sind an sich im Stand der Technik bekannt und werden durch Verseifung oder Hydrolyse von EthylenVinylacetat-Copolymeren hergestellt. Für die Zwecke der vorliegenden Erfindung sind insbesondere EVOH-Copolymere geeignet, die einen Hydrolysegrad von 96 bis 99% aufweisen. Der Schmelzpunkt geeigneter EVOH-Copolymere liegt im allgemeinen über 150°C. Erfindungsgemäß soll der Ethylengehalt im EVOH-Copolymer außerdem bei oder unter 40 mol% liegen, und die Dicke der EVOH-Barriereschicht soll weniger als 2 µm betragen.

### Haftvermittlerschicht C:

Es ist erforderlich, dass die Strukturschicht B und die EVOH-Barriereschicht D über eine Haftvermittlerschicht C verbunden sind. Die Haftschicht ist daher zwischen der inneren Ethylen-Vinylalkohol (EVOH)-Schicht und der Schicht aus teilkristallinen Polyolefinen B vorgesehen. Die Haftschicht C sorgt dafür, dass die EVOH-Schicht D und die Schicht B so fest miteinander verbunden sind, dass beide Schichten D und B gemeinsam verstreckt werden können und die gegenseitige Haftung erhalten bleibt, während sie auf der Anlage für das simultane Recken gemeinsam simultan orientiert werden. Die Haftschicht ist eine Schicht auf der Basis von modifizierten Polyolefinen.

Die modifizierten Polyolefine basieren auf Ethylenpolymeren oder insbesondere den bevorzugten Propylenpolymeren, worunter Propylenhomopolymere, Propylencopolymere oder Propylenterpolymere zu verstehen sind. Propylencopolymere oder Propylenterpolymere enthalten überwiegend Propyleneinheiten, vorzugsweise mindestens 80-98 Gew.-%, sowie zusätzliche Ethylen- und/oder Butyleneinheiten in entsprechenden Mengen als Comonomere. Diese Polymeren werden vorzugsweise mit Maleinsäureanhydrid, gegebenenfalls auch mit anderen Carbonsäuremonomeren oder deren Estern, wie z.B. Acrylsäure oder deren Derivaten, modifiziert.

Derartige modifizierte Polypropylene und Polyolefine sind an sich im Stand der Technik bekannt und werden beispielsweise von der Fa. Mitsui Chemicals unter dem Handelsnamen Admer® oder von Mitsubishi Chemicals unter Modic® oder von Chemplex unter Plexar®, sowie als Epilene® von Eastman und als Bynel® von DuPont vertrieben.

Bevorzugt sind für die Zwecke der vorliegenden Erfindung Propylenhomopolymere oder Propylencopolymere, die mit Maleinsäureanhydrid modifiziert sind (z.B. Produkte der Q-Serie der Firma Mitsui Chemicals), deren Schmelzindices im Bereich von 1 bis 10 g/10min bei 230°C (ASTM D 1238) und deren Vicat Erweichungspunkte zwischen 110 und 155°C liegen.

Die Dicke der Haftschicht C beträgt im allgemeinen jeweils 0,3-5µm, vorzugsweise 0,3-3µm, insbesondere 0,3 bis 2µm.

### Schicht B:

Die Schicht B ist eine Strukturschicht aus einem biaxial orientierbaren Polypropylen, und muss eine hinreichend große Haftfestigkeit gegenüber der Haftschicht C aufweisen, damit die Haftung während des simultanen Verstreckens bei Temperaturen unter 145°C erhalten bleibt.

Für die Schicht sind teilkristalline Polypropylene geeignet, deren Kristallinität mindestens 10-70%, vorzugsweise 30-70%, beträgt und deren Schmelzpunkt mindestens 110°C beträgt.

Propylenpolymere sind Propylenhomopolymere, Propylencopolymere oder Propylenterpolymere. Propylencopolymere oder Propylenterpolymere enthalten überwiegend Propyleneinheiten, vorzugsweise mindestens 80-98 Gew.-%, und zusätzliche Ethylen- und/oder Butyleneinheiten in entsprechenden Mengen als Comonomere.

Die genannten Propylenpolymere können einzeln eingesetzt oder als Blends eingesetzt werden. Vorzugsweise werden außerdem Modifizierer eingesetzt, die eine Strecktemperatur unter 145°C zulassen. Vorzugsweise werden als Modifizierer z.B ataktisches PP, syndiotaktisches PP, Kohlenwasserstoffharze, Ethylen-Propylen-Copolymere, Propylen-Butylen-Copolymere, Ethylen-Propylen-Butylen-Terpolymere, Polybutylene, Regenerat-PP und Linear Low Density Polyethylene (PE-LLD) eingesetzt.

Bevorzugt wird ein Propylenpolymer eingesetzt, dessen Ethylengehalt zwischen 0-15 Gew.-%, bezogen auf das Gesamtpolymer, beträgt. Besonders geeignet sind isotaktische Propylenpolymere mit einem Schmelzpunkt von 150 bis 170°C und einem Schmelzflussindex (Messung DIN 53735 bei 21,6N Belastung und 230°C) von 1,0 bis 15 g/10min. Die Kristallinität des Propylenpolymeren beträgt vorzugsweise 40-70%. Die Molekulargewichtsverteilung des Homopolymeren kann variieren. Das Verhältnis des Gewichtmittels Mw zum Zahlenmittel Mn liegt im allgemeinen zwischen 1 und 15.

Es ist bevorzugt, dass die Schichtdicke der Schichten B zwischen 3 und 35µm, vorzugsweise 3 bis 15 µm, beträgt.

Gemäß einer weiteren Ausführungsform kann die Schicht B eine opake Schicht sein, wie sie bei bekannten opaken BOPP-Folien als opake Basisschicht vorliegt. In dieser Ausführung ist die Schicht B durch Zusatz von Füllstoffen opak. Im allgemeinen enthält die Schicht B in dieser Ausführung mindestens 70 Gew.-%, bezogen auf das Gewicht der Schicht B, eines der vorstehend für die Schicht B beschriebenen teilkristallinen Polyolefine. Der Füllstoffgehalt in der opaken Schicht B liegt vorzugsweise zwischen 10 und 50 Gew.-%, bezogen auf das Gewicht der Schicht B. Füllstoffe sind im Sinne der vorliegenden Erfindung auch Pigmente und/oder vakuoleninitiierende Teilchen und sind an sich im Stand der Technik bekannt.

Übliche Pigmente und/oder vakuoleninitiierende Teilchen sind anorganische und/oder organische Teilchen, wie z.B. Aluminiumoxid, Aluminiumsulfat, Bariumsulfat, Calciumcarbonat, Magnesiumcarbonat, Silicate wie Aluminiumsilicat und Magnesiumsilicat und Siliciumdioxid. Als vakuoleninitiierende organische Füllstoffe kommen die üblicherweise für diese Zwecke verwendeten, mit dem Polymeren der Basisschicht unverträglichen Polymeren in Frage, insbesondere HDPE, Copolymere von cyclischen Olefinen wie Norbornen oder Tetracyclododekan mit Ethylen oder Propen, Polyester, Polystyrole, Polyamide, halogenierte organische Polymere, wobei Polyester wie beispielsweise Polybutylenterephthalate bevorzugt sind.

Die Dichte der opaken Schicht B und damit der Folie kann je nach Zusammensetzung der opaken Schicht B in einem Bereich von 0,4 bis 1,1 g/cm³ variieren.

### Deckschichten A und E

Die erfindungsgemäße Folie weist zusätzlich zu dem Aufbau aus EVOH-Barriereschicht D, den beiden Haftschichten C und den Polyolefinschichten B vorzugsweise beidseitige gleiche oder unterschiedliche Deckschichten auf, welche die Oberflächen der Schichten B abdecken.

Diese polyolefinischen Deckschichten bilden die außenliegenden Schichten des fertigen mehrschichtigen Folienaufbaus und bestimmen Funktionalitäten wie Siegelfähigkeit, Glanz, Reibung und, ggf. nach einer zusätzlichen Behandlung, Eigenschaften wie die Bedruck-, Beschreib- und Metallisierbarkeit.

Beispiele für geeignete olefinische Polymere für die Deckschichten sind Polyethylene, Polypropylene, Polybutylene oder Mischpolymerisate mit Olefinen mit zwei bis acht C-Atomen, wobei Co- oder Terpolymere aus Ethylen-, Propylen und/oder Butyleneinheiten oder Mischungen aus den genannten Polymeren bevorzugt sind.

Die Dicke der jeweiligen Deckschicht ist im allgemeinen größer als 0,1 µm und liegt vorzugsweise im Bereich von 0,5-10 µm.

Die Deckschichten und/oder die Schicht B können zusätzlich übliche Additive wie Neutralisationsmittel, Stabilisatoren, Antistatika, UV- und Lichtschutzmittel, Antiblockmittel und/oder Gleitmittel in jeweils wirksamen Mengen enthalten.

In einer möglichen Ausführungsform werden die Oberflächen der Deckschichten A und/oder E einer Corona-, Plasma- oder Flammbehandlung unterzogen. Diese Behandlung erhöht in an sich bekannter Weise die Haftung gegenüber Druckfarben, Klebern, Kaltsiegelschichten, Metallschichten, etc.

Die Gesamtdicke der erfindungsmäßigen Folie kann innerhalb weiter Grenzen variieren und richtet sich nach dem beabsichtigten Endverwendungszweck. Sie beträgt vorzugsweise 4-100 µm, insbesondere 5-80 µm, vorzugsweise 6-60 µm.

Nachfolgend wird die Erfindung anhand von Ausführungsbeispielen weiter erläutert, wobei der Fachmann den geschilderten Verfahrensbedingungen, Materialien und Folieneigenschaften weitere Angaben zur Erfindung und ihren Vorteilen entnimmt.

In den Beispielen beschreiben die Beispiele 1 bis 17 die Herstellung einer insgesamt 7-schichtigen Mehrschichtfolie mit einer EVOH-Barriereschicht des oben erläuterten Schichtaufbaus A/B/C/D/C/B/E, wobei die Beispiele 1 bis 6 Vergleichbeispiele sind.

Bei den in den Beispielen mit ihren Handelsbezeichnungen angegebenen Materialien handelt es sich um Materialien der folgenden Art:
- HP 522 H:: isotaktisches Polypropylen-Homopolymer "Moplen®" HP 522 H der Firma Basell;
- HP 422 H:: isotaktisches Polypropylen-Homopolymer "Moplen®" HP 422 H (Minirandom-Ethylengehalt ca. 1,5%) der Firma Basell;
- Admer® QF 551 E:: anhydrid-modifiziertes Polypropylenharz der Firma Mitsui Chemicals;
- 7372 XCP:: Polypropylen-Terpolymer "Adsyl®" 7372 XCP der Firma Basell;
- 5C37 F:: Polypropylen-Terpolymer "Adsyl®" 5C37F der Firma Basell;
- MA 0935 PP:: Polypropylen Masterbatch mit 50% Hydrocarbon der Firma Constab;
- LC101 B:: Ethylen-Vinylalkohol-Copolymerisat "EVAL^{™}" LC 101 B mit einem Ethylenanteil von 27 [mol%] der Firma EVAL EUROPE
- F101 B:: Ethylen-Vinylalkohol-Copolymerisat "EVAL^{™}" F 101 B mit einem Ethylenanteil von 32 [mol%] der Firma EVAL EUROPE
- H101 B:: Ethylen-Vinylalkohol-Copolymerisat "EVAL^{™}" H 101 B mit einem Ethylenanteil von 38 [mol%] der Firma EVAL EUROPE
- ES104 B:: Ethylen-Vinylalkohol-Copolymerisat "EVAL^{™}" ES 104 B mit einem Ethylenanteil von 44 [mol%] der Firma EVAL EUROPE
- G 156 B:: Ethylen-Vinylalkohol-Copolymerisat "EVAL^{™}" G 156 B mit einem Ethylenanteil von 48 [mol%] der Firma EVAL EUROPE
- SP 482 B:: Ethylen-Vinylalkohol-Copolymerisat "EVAL^{™}" SP 482 B mit einem Ethylenanteil von 32 [mol%] der Firma EVAL EUROPE

### Beispiele

### Vor Beispiel 1:

In den Beispielen wurden 7-schichtige Barriere-Mehrschichtfolien mit einer EVOH-Schicht als Innenschicht hergestellt, wobei eine Extrusion durch eine 7-schichtige Breitschlitz-Schmelzedüse auf eine Kühlwalze erfolgte und die auf der Kühlwalze gebildete 7-schichtige Primärfolie sofort auf einer Laboratoriums-LISIM®-Reckanlage der Firma Brückner simultan wie in den Beispielen angegeben gereckt wurde.

Die Schichtanordnung A/B/C/D/C/B/E der Schmelzen zur Herstellung der Mehrschichtfolie wurde dabei mittels der folgenden Düsenanordnung mit den angegebenen Fördereinrichtungen erzeugt:
- Schicht A: -Außenschicht, Luftmesserseite: 43 mm Einschneckenextruder;
- Schicht B: -Zwischenschichten: 55 mm Zweischneckenextruder mit Schmelzepumpe;
- Schicht C: -Haftschichten: 35 mm Einschneckenextruder mit Schmelzepumpe;
- Schicht D: -EVOH-Kernschicht: 35 mm Einschneckenextruder mit Schmelzepumpe;
- Schicht E: -Außenschicht, Kühlwalzenseite: 50 mm Einschneckenextruder

Es ist darauf hinzuweisen, dass die Bezeichnung der Schichten A bis E durch die Anordnung der Breitschlitzdüsen für die Schmelzeextrusion bzw. deren Position gegenüber der Kühlwalze und dem gegenüberliegenden Luftmesser vorgegeben ist.

In den Beispielen 1 bis 6, die Vergleichsbeispiele darstellen, wird die 7-schichtige Barriere-Mehrschichtfolie mit einer EVOH-Schicht als Innenschicht unter Bedingungen, wie sie für die simultane Orientierung von biaxial orientierten Polypropylenfolien (s-BOPP Folien) optimiert wurden, orientiert. Optimierte Bedingungen liefern BOPP-Folien mit einer Kombination aus den gewünschten mechanischen und optischen Eigenschaften in Verbindung mit guten Dickentoleranzen und der erforderlichen Laufsicherheit zur Sicherung einer wirtschaftlichen Produktion. Die Strecktemperaturen unter Verwendung von Standard-Polypropylen-Homopolymeren liegen im Bereich 150-160°C, vorzugsweise bei 155°C.

In den erfindungsgemäßen Beispielen 7 bis 17 wird die 7-schichtige Barriere-Mehrschichtfolie mit einer EVOH-Schicht als Innenschicht bei Temperaturen unter 145°C, im besonderen unter 140°C und vorzugsweise bei etwa 135°C verstreckt. Zur Absenkung der Strecktemperatur ist dabei eine Modifizierung der Schicht B erforderlich, wie sie durch die Verwendung der unter Schicht B und in den Beispielen 7 bis 17 beschriebenen Materialien zu erreichen ist.

### Beispiel 1 (Vergleichsbeispiel)

Materialien und die Betriebsbedingungen der fünf Extruder waren wie folgt:
- Schicht A:: 5C37 F, Extruder mit einer Extrusionstemperatur von 240°C
- Schicht B:: HP 522 H; Extruder mit einer Extrusionstemperatur von 258°C
- Schicht C:: Admer QF 551 E; Extruder mit einer Extrusionstemperatur von 236°C
- Schicht D:: G 156 B: Extruder mit einer Extrusionstemperatur von 186°C
- Schicht E:: 5C37 F, Extruder mit einer Extrusionstemperatur von 240°C

Die nach der Koextrusion der 7-schichtigen Schmelze erhaltene Primärfolie wurde unter Bedingungen, wie sie für die simultane Orientierung von biaxial orientierten Polypropylenfolien (S-BOPP-Folien) optimiert wurden, orientiert, und zwar mit einer 7-fachen Reckung in Maschinenrichtung (MD) und einer 6-fachen Reckung in Querrichtung (TD), und zwar nach Maßgabe der Vergrößerung eines auf die Basisfolie vor dem Recken aufgedruckten Gitters. Die Strecktemperatur in der Reckzone betrug 158°C. Die Relaxation betrug längs 5% und quer 5%.

Es wurde eine Folie mit einer Gesamtdicke von 20 µm erhalten, und die Dicke der EVOH-Schicht (Schicht D) betrug etwa 1,4 µm.

Die erhaltene Folie war von brilliantem Aussehen und ohne jegliche Netzstruktur.

Die Zugfestigkeit betrug längs 241 N/mm² und quer 187 N/mm².
Das E-Modul lag längs bei 2471 N/mm² und quer 1929 N/mm². Die Reissdehnung betrug längs 93 % und quer 143 %.

Die Trübung hatte einen Wert von 1,0 %. Der Glanz lag bei 91.
Der Schrumpf lag bei 120°C und 5 min längs bei 4,1 % und quer bei 3,1 %.

Die Sauerstoffbarriere betrug jedoch nur 81,2 cm³/m²dbar

### Beispiel 2 (Vergleichsbeispiel)

Es wurde eine Folie wie in Beispiel 1 beschrieben hergestellt. Im Unterschied zu Beispiel 1 wurde in der Schicht D 100 Gew.-% EVAL ES 104 B mit einem Ethylengehalt von 44 Mol% verwendet.

Die Extrusionstemperatur betrug 223°C. Die Strecktemperatur in der Reckzone betrug 156,5°C.

Es wurde eine Folie mit einer Gesamtdicke von 20 µm erhalten, und die Dicke der EVOH-Schicht (Schicht D) betrug etwa 1,8 µm.

Die erhaltene Folie war von brilliantem Aussehen und ohne jegliche Netzstruktur.

Die Zugfestigkeit betrug längs 238 N/mm² und quer 193 N/mm²_{.}
Das E-Modul lag längs bei 2480 N/mm² und quer 2090 N/mm². Die Reissdehnung betrug längs 95 % und quer 134 %.

Die Trübung hatte einen Wert von 0,95 %. Der Glanz lag bei 91.
Der Schrumpf lag bei 120°C und 5 min längs bei 4,3 % und quer bei 4,1 %.

Die Sauerstoffbarriere betrug jedoch nur 62,7 cm³/m²dbar.

### Beispiel 3 (Vergleichsbeispiel)

Es wurde eine Folie wie in Beispiel 1 beschrieben hergestellt. Im Unterschied zu Beispiel 1 wurde in der Schicht D 100 Gew.-% EVAL H 101 B mit einem Ethylengehalt von 38 Mol% verwendet.

Die Extrusionstemperatur betrug 208°C. Die Strecktemperatur in der Reckzone betrug 155,5°C. Das Streckverhältnis in Maschinenrichtung betrug 7, in Querrichtung 6,5.

Es wurde eine Folie mit einer Gesamtdicke von 20 µm erhalten, und die Dicke der EVOH-Schicht (Schicht D) betrug etwa 1,7 µm.

Das Aussehen der erhaltenen Folie war trüb und mit einer starken Netzstruktur.

### Beispiel 4 (Vergleichsbeispiel)

Es wurde eine Folie wie in Beispiel 1 beschrieben hergestellt. Im Unterschied zu Beispiel 1 wurde in der Schicht D 100 Gew.-% EVAL F 101 B mit einem Ethylengehalt von 32 Mol% verwendet.

Die Extrusionstemperatur betrug 208°C. Die Strecktemperatur in der Reckzone betrug 158,5°C. Das Streckverhältnis in Maschinenrichtung betrug 7, in Querrichtung 6.

Es wurde eine Folie mit einer Gesamtdicke von 20 µm erhalten, und die Dicke der EVOH-Schicht (Schicht D) betrug etwa 1,7 µm.

Das Aussehen der erhaltenen Folie war trüb mit einer starken Netzstruktur.

### Beispiel 5 (Vergleichsbeispiel)

Es wurde eine Folie wie in Beispiel 1 beschrieben hergestellt. Im Unterschied zu Beispiel 1 wurde in der Schicht D 100 Gew.-% EVAL LC 101 B mit einem Ethylengehalt von 27 Mol% verwendet.

Die Extrusionstemperatur betrug 207°C. Die Strecktemperatur in der Reckzone betrug 156,5°C. Das Streckverhältnis in Maschinenrichtung betrug 7, in Querrichtung 6,7.

Es wurde eine Folie mit einer Gesamtdicke von 18 µm erhalten, und die Dicke der EVOH-Schicht (Schicht D) betrug etwa 1,1 µm.

Das Aussehen der erhaltenen Folie war trüb mit einer starken Netzstruktur.

### Beispiel 6 (Vergleichsbeispiel)

Es wurde eine Folie wie in Beispiel 1 beschrieben hergestellt. Im Unterschied zu Beispiel 1 wurde in der Schicht D 100 Gew.-% EVAL SP 482 B mit einem Ethylengehalt von 32 Mol% verwendet. Dieser neue EVAL-Typ soll eine verbesserte Optik bei ansprechender Barriere gewährleisten.

Die Extrusionstemperatur betrug 207°C. Die Strecktemperatur in der Reckzone betrug 157,5°C. Das Streckverhältnis in Maschinenrichtung betrug 7, in Querrichtung 6,2.

Es wurde eine Folie mit einer Gesamtdicke von 15,5 µm erhalten, und die Dicke der EVOH-Schicht (Schicht D) betrug etwa 1,2 µm.

Das Aussehen der erhaltenen Folie war leicht trüb. Auf der Folie waren kleine Pünktchen aber keine Netzstruktur zu erkennen.

Die Sauerstoffbarriere betrug jedoch nur 185 cm³/m²dbar.

### Beispiel 7 (nicht gemäß den Ansprüchen)

Es wurde eine Folie wie in Beispiel 1 beschrieben hergestellt. Im Unterschied zu Beispiel 1 wurde in der Schicht D 100 Gew.-% EVAL H 101 B mit einem Ethylengehalt von 38 Mol% verwendet.

Die Extrusionstemperatur betrug 226°C. In der Schicht B wurde ein Blend aus 50 Gew.-% HP 522 H (Polypropylen-Homopolymer) und 50 Gew.-% 7372 XCP (Polypropylen-Terpolymer) verwendet. Dadurch konnte die Strecktemperatur in der Reckzone auf 137,5°C reduziert werden. Das Streckverhältnis in Maschinenrichtung betrug 6, in Querrichtung 5,8.

Es wurde eine Folie mit einer Gesamtdicke von 19 µm erhalten, und die Dicke der EVOH-Schicht (Schicht D) betrug etwa 1,7 µm.

Die erhaltene Folie war von brilliantem Aussehen und ohne jegliche Netzstruktur.

Die Zugfestigkeit betrug längs 210 N/mm² und quer 179 N/mm²_{.}
Das E-Modul lag längs bei 1830 N/mm² und quer 1638 N/mm². Die Reissdehnung betrug längs 84 % und quer 93 %.

Die Trübung hatte einen Wert von 1,8 %. Der Glanz lag bei 89.
Der Schrumpf lag bei 120°C und 5 min längs bei 13,2 % und quer bei 14,1 %.

Die Sauerstoffbarriere betrug 6,2 cm³/m²dbar

### Beispiel 8

Es wurde eine Folie wie in Beispiel 1 beschrieben hergestellt. Im Unterschied zu Beispiel 1 wurde in der Schicht D 100 Gew.-% EVAL F 101 B mit einem Ethylengehalt von 32 Mol% verwendet. Die Extrusionstemperatur betrug 218°C.

In der Schicht B wurde ein Blend aus 50 Gew. - % HP 522 H (Polypropylen-Homopolymer) und 50 Gew.-% 7372 XCP (Polypropylen-Terpolymer) verwendet. Dadurch konnte die Strecktemperatur in der Reckzone auf 137°C reduziert werden. Das Streckverhältnis in Maschinenrichtung betrug 6, in Querrichtung 6.

Es wurde eine Folie mit einer Gesamtdicke von 19 µm erhalten, und die Dicke der EVOH-Schicht (Schicht D) betrug etwa 1,4 µm.

Die erhaltene Folie war von brilliantem Aussehen und ohne jegliche Netzstruktur.

Die Zugfestigkeit betrug längs 181 N/mm² und quer 204 N/mm².
Das E-Modul lag längs bei 1591 N/mm² und quer 1739 N/mm². Die Reissdehnung betrug längs 87 % und quer 77 %.

Die Trübung hatte einen Wert von 2,0 %. Der Glanz lag bei 89. Der Schrumpf lag bei 120°C und 5 min längs bei 14,1 % und quer bei 15,5 %.

Die Sauerstoffbarriere betrug 3,0 cm³/m²dbar

### Beispiel 9

Es wurde eine Folie wie in Beispiel 1 beschrieben hergestellt. Im Unterschied zu Beispiel 1 wurde in der Schicht D 100 Gew.-% EVAL F 101 B mit einem Ethylengehalt von 32 Mol% verwendet. Die Extrusionstemperatur betrug 218°C.

In der Schicht B wurde ein Blend aus 60 Gew.-% HP 522 H (Polypropylen-Homopolymer) und 40 Gew.-% 7372 XCP (Polypropylen-Terpolymer) verwendet. Dadurch konnte die Strecktemperatur in der Reckzone auf 138,5°C reduziert werden. Das Streckverhältnis in Maschinenrichtung betrug 7, in Querrichtung 5,8.

Es wurde eine Folie mit einer Gesamtdicke von 16,5 µm erhalten, und die Dicke der EVOH-Schicht (Schicht D) betrug etwa 1,3 µm.

Die erhaltene Folie war von brilliantem Aussehen und ohne jegliche Netzstruktur.

Die Zugfestigkeit betrug längs 253 N/mm² und quer 170 N/mm².
Das E-Modul lag längs bei 2408 N/mm² und quer 1772 N/mm². Die Reissdehnung betrug längs 62 % und quer 98 %.

Die Trübung hatte einen Wert von 2,1 %. Der Glanz lag bei 88.
Der Schrumpf liegt bei 120°C und 5 min längs bei 14,0 % und quer bei 11,1 %.

Die Sauerstoffbarriere betrug 3,0 cm³/m²dbar

### Beispiel 10

Es wurde eine Folie wie in Beispiel 1 beschrieben hergestellt. Im Unterschied zu Beispiel 1 wurde in der Schicht D 100 Gew.-% EVAL F 101 B mit einem Ethylengehalt von 32 Mol% verwendet. Die Extrusionstemperatur betrug 218°C.

In der Schicht B wurde ein Blend aus 60 Gew.-% HP 522 H (Polypropylen-Homopolymer) und 40 Gew.-% 7372 XCP (Polypropylen-Terpolymer) verwendet. Dadurch konnte die Strecktemperatur in der Reckzone auf 137,5°C reduziert werden. Das Streckverhältnis in Maschinenrichtung betrug 6, in Querrichtung 5,8.

Es wurde eine Folie mit einer Gesamtdicke von 20 µm erhalten, und die Dicke der EVOH-Schicht (Schicht D) betrug etwa 1,6 µm. Die Relaxation betrug längs 15% und quer 15%.

Die erhaltene Folie war von brilliantem Aussehen und ohne jegliche Netzstruktur.

Die Zugfestigkeit betrug längs 217 N/mm² und quer 156 N/mm²_{.}
Das E-Modul lag längs bei 1929 N/mm² und quer 1572 N/mm². Die Reissdehnung betrug längs 82 % und quer 116 %.

Die Trübung hatte einen Wert von 2,2 %. Der Glanz lag bei 85.
Der Schrumpf lag bei 120°C und 5 min längs bei 5,1 % und quer bei 4,8 %.

Die Sauerstoffbarriere betrug 3,3 cm³/m²dbar

### Beispiel 11

Es wurde eine Folie wie in Beispiel 1 beschrieben hergestellt. Im Unterschied zu Beispiel 1 wurde in der Schicht D 100 Gew.-% EVAL F 101 B mit einem Ethylengehalt von 32 Mol% verwendet. Die Extrusionstemperatur betrug 218°C.

In der Schicht B wurde ein Blend aus 80 Gew.-% HP 522 H (Polypropylen-Homopolymer) und 20 Gew.-% 7372 XCP (Polypropylen-Terpolymer) verwendet. Dadurch konnte die Strecktemperatur in der Reckzone auf 135,0°C reduziert werden. Das Streckverhältnis in Maschinenrichtung betrug 7, in Querrichtung 5,8.

Es wurde eine Folie mit einer Gesamtdicke von 17 µm erhalten, und die Dicke der EVOH-Schicht (Schicht D) betrug etwa 1,4 µm.

Die erhaltene Folie war von brilliantem Aussehen und ohne jegliche Netzstruktur.

Die Zugfestigkeit betrug längs 269 N/mm² und quer 187 N/mm². Das E-Modul lag längs bei 2618 N/mm² und quer 2063 N/mm². Die Reissdehnung betrug längs 65 % und quer 87 %.

Die Trübung hatte einen Wert von 2,2 %. Der Glanz lag bei 83.
Der Schrumpf liegt bei 120°C und 5 min längs bei 14,0% und quer bei 10,2 %.

Die Sauerstoffbarriere betrug 3,0 cm³/m²dbar

### Beispiel 12

Es wurde eine Folie wie in Beispiel 1 beschrieben hergestellt. Im Unterschied zu Beispiel 1 wurde in der Schicht D 100 Gew.-% EVAL LC 101 B mit einem Ethylengehalt von 27 Mol% verwendet. Die Extrusionstemperatur betrug 217°C.

In der Schicht B wurde ein Blend aus 80 Gew.-% HP 522 H (Polypropylen-Homopolymer) und 20 Gew.-% 7372 XCP (Polypropylen-Terpolymer) verwendet. Dadurch konnte die Strecktemperatur in der Reckzone auf 136,0°C reduziert werden. Das Streckverhältnis in Maschinenrichtung betrug 7, in Querrichtung 5,8.

Es wurde eine Folie mit einer Gesamtdicke von 16,4 µm erhalten, und die Dicke der EVOH-Schicht (Schicht D) betrug etwa 1,4 µm.

Die erhaltene Folie war von brilliantem Aussehen und ohne jegliche Netzstruktur.

Die Zugfestigkeit betrug längs 260 N/mm² und quer 189 N/mm². Das E-Modul lag längs bei 2547 N/mm² und quer 2092 N/mm². Die Reissdehnung betrug längs 64 % und quer 85 %.

Die Trübung hatte einen Wert von 1,7 %. Der Glanz lag bei 88.
Der Schrumpf liegt bei 120°C und 5 min längs bei 11,6% und quer bei 9,6 %.

Die Sauerstoffbarriere betrug 2,3 cm³/m²dbar

### Beispiel 13

Es wurde eine Folie wie in Beispiel 1 beschrieben hergestellt. Im Unterschied zu Beispiel 1 wurde in der Schicht D 100 Gew.-% EVAL LC 101 B mit einem Ethylengehalt von 27 Mol% verwendet. Die Extrusionstemperatur betrug 217°C.

In der Schicht B wurde ein Blend aus 80 Gew.-% HP 522 H (Polypropylen-Homopolymer) und 20 Gew.-% 7372 XCP (Polypropylen-Terpolymer) verwendet. Dadurch konnte die Strecktemperatur in der Reckzone auf 136,0°C reduziert werden. Das Streckverhältnis in Maschinenrichtung betrug 6,3, in Querrichtung 5,2. Die Relaxation betrug längs 15% und quer 15%.

Es wurde eine Folie mit einer Gesamtdicke von 21,0 µm erhalten, und die Dicke der EVOH-Schicht (Schicht D) betrug etwa 1,7 µm.

Die erhaltene Folie war von brilliantem Aussehen und ohne jegliche Netzstruktur.

Die Zugfestigkeit betrug längs 225 N/mm² und quer 159 N/mm². Das E-Modul lag längs bei 2133 N/mm² und quer 1868 N/mm². Die Reissdehnung betrug längs 85 % und quer 97 %. Die Trübung hatte einen Wert von 1,6 %. Der Glanz lag bei 89. Der Schrumpf lag bei 120°C und 5 min längs bei 3,0% und quer bei 3,1 %.

Die Sauerstoffbarriere betrug 2,0 cm³/m²dbar

### Beispiel 14

Es wurde eine Folie wie in Beispiel 1 beschrieben hergestellt. Im Unterschied zu Beispiel 1 wurde in der Schicht D 100 Gew.-% EVAL F 101 B mit einem Ethylengehalt von 32 Mol% verwendet. Die Extrusionstemperatur betrug 217°C.

In der Schicht B wurde ein Blend aus 80 Gew.-% HP 522 H (Polypropylen-Homopolymer) und 20 Gew.-% 7372 XCP (Polypropylen-Terpolymer) verwendet. Dadurch konnte die Strecktemperatur in der Reckzone auf 136,5°C reduziert werden. Das Streckverhältnis in Maschinenrichtung betrug 6, in Querrichtung 5, 3. Die Relaxation betrug längs 15% und quer 15%.

Es wurde eine Folie mit einer Gesamtdicke von 20,0 µm erhalten, und die Dicke der EVOH-Schicht (Schicht D) betrug etwa 1,7 µm.

Die erhaltene Folie war von brilliantem Aussehen und ohne jegliche Netzstruktur.

Die Zugfestigkeit betrug längs 231 N/mm² und quer 168 N/mm². Das E-Modul lag längs bei 2118 N/mm² und quer 1807 N/mm². Die Reissdehnung betrug längs 88 % und quer 107 %. Die Trübung hatte einen Wert von 1,5 %. Der Glanz lag bei 89. Der Schrumpf lag bei 120°C und 5 min längs bei 3,3% und quer bei 1,9 %.

Die Sauerstoffbarriere betrug 2,8 cm³/m²dbar

### Beispiel 15 (nicht gemäß dem Ansprüchen)

Es wurde eine Folie wie in Beispiel 1 beschrieben hergestellt. Im Unterschied zu Beispiel 1 wurde in der Schicht D 100 Gew.-% EVAL H 101 B mit einem Ethylengehalt von 38 Mol% verwendet. Die Extrusionstemperatur betrug 218°C.

In der Schicht B wurde ein Blend aus 80 Gew.-% HP 522 H (Polypropylen-Homopolymer) und 20 Gew.-% 7372 XCP (Polypropylen-Terpolymer) verwendet. Dadurch konnte die Strecktemperatur in der Reckzone auf 136,0°C reduziert werden. Das Streckverhältnis in Maschinenrichtung betrug 7, in Querrichtung 6.

Es wurde eine Folie mit einer Gesamtdicke von 16,0 µm erhalten, und die Dicke der EVOH-Schicht (Schicht D) betrug etwa 1,3 µm.

Die erhaltene Folie war von brilliantem Aussehen und ohne jegliche Netzstruktur.

Die Zugfestigkeit betrug längs 264 N/mm² und quer 200 N/mm². Das E-Modul lag längs bei 2526 N/mm² und quer 1998 N/mm². Die Reissdehnung betrug längs 73 % und quer 99 %. Die Trübung hatte einen Wert von 1,4 %. Der Glanz lag bei 90. Der Schrumpf lag bei 120°C und 5 min längs bei 9,9% und quer bei 8 %.

Die Sauerstoffbarriere betrug 8,2 cm³/m²dbar

### Beispiel 16

Es wurde eine Folie wie in Beispiel 1 beschrieben hergestellt. Im Unterschied zu Beispiel 1 wurde in der Schicht D 100 Gew.-% EVAL LC 101 B mit einem Ethylengehalt von 27 Mol% verwendet. Die Extrusionstemperatur betrug 218°C.

In der Schicht B wurde 100 Gew.-% HP 422 H (Polypropylen-Minirandom Ethylengehalt 1,5%) verwendet. Dadurch konnte die Strecktemperatur in der Reckzone auf 135,0°C reduziert werden. Das Streckverhältnis in Maschinenrichtung betrug 6, in Querrichtung 6.

Es wurde eine Folie mit einer Gesamtdicke von 17,0 µm erhalten, und die Dicke der EVOH-Schicht (Schicht D) betrug etwa 1,5 µm.

Die erhaltene Folie war von brilliantem Aussehen und ohne jegliche Netzstruktur.

Die Zugfestigkeit betrug längs 224 N/mm² und quer 210 N/mm². Das E-Modul lag längs bei 2376 N/mm² und quer 2376 N/mm². Die Reissdehnung betrug längs 76 % und quer 75 %. Die Trübung hatte einen Wert von 0,95 %. Der Glanz lag bei 91. Der Schrumpf lag bei 120°C und 5 min längs bei 7,6% und quer bei 7,4 %.

Die Sauerstoffbarriere betrug 1,8 cm³/m²dbar

### Beispiel 17

Es wurde eine Folie wie in Beispiel 1 beschrieben hergestellt. Im Unterschied zu Beispiel 1 wurde in der Schicht D 100 Gew.-% EVAL LC 101 B mit einem Ethylengehalt von 27 Mol% verwendet. Die Extrusionstemperatur betrug 218°C.

In der Schicht B wurde ein Blend aus 90 Gew.-% HP 422 H und 10 Gew.-% MA 0935 PP (Polypropylen Masterbatch mit 50% Hydrocarbon) verwendet. Dadurch konnte die Strecktemperatur in der Reckzone auf 135,0°C reduziert werden. Das Streckverhältnis in Maschinenrichtung betrug 6, in Querrichtung 6,2.

Es wurde eine Folie mit einer Gesamtdicke von 17,5 µm erhalten, und die Dicke der EVOH-Schicht (Schicht D) betrug etwa 1,5 µm.

Die erhaltene Folie war von brilliantem Aussehen und ohne jegliche Netzstruktur.

Die Zugfestigkeit betrug längs 231 N/mm² und quer 195 N/mm². Das E-Modul lag längs bei 2807 N/mm² und quer 2626 N/mm². Die Reissdehnung betrug längs 77 % und quer 77 %. Die Trübung hatte einen Wert von 0,93 %. Der Glanz lag bei 92. Der Schrumpf lag bei 120°C und 5 min längs bei 7,2% und quer bei 6,8 %.

Die Sauerstoffbarriere betrug 1,7 cm³/m²dbar

### Zusammenfassung der Ergebnisse:

Die Ergebnisse der in den Beispielen geschilderten Folienherstellungsversuche zeigen deutlich, dass gemäß der vorliegenden Erfindung BOPP-Folien mit EVOH-Barriereschichten mit hervorragenden Barriereeigenschaften und einer Kombination weiterer ausgezeichneter und für Verpackungszwecke wünschenswerter Eigenschaften erhalten werden, wobei sehr gute Folienfestigkeiten, -steifigkeiten, hervorragende optische Eigenschaften mit hervorragenden Eigenschaften bezüglich Aroma- und Geruchsdichtigkeit und hervorragenden sonstigen Barriereeigenschaften kombiniert sind. Auch ist es möglich, Barriereeigenschaften mit Schrumpfeigenschaften zu verbinden.

Der Bereich der in den Beispielen angegebenen Herstellungsbedingungen ist nur durch die während der Versuche zur Verfügung stehenden Ausrüstungen beschränkt, die angegebenen konkreten Verfahrensbedingungen stellen jedoch nicht die Grenzen der vorliegenden Erfindung bzw. des Verfahrens zur Herstellung der erfindungsgemäßen Folien dar. In Abhängigkeit von den beabsichtigten Verwendungen der Folien können beispielsweise Dicken der Barriere bis zu 10 µm erhalten werden, wenn das wünschenswert sein sollte.

Ferner ist darauf hinzuweisen, dass die Bedingungen des simultanen Reckens so gesteuert werden können, dass die erhaltenen Folien einer Stabilisierung unterzogen werden, so dass sie eine Dimensionsstabilität aufweisen, bei der in einer oder beiden ihrer Hauptrichtungen, die MD bzw. TD ihrer Herstellung entsprechen, ein Schrumpf von 5% oder weniger erhalten wird. Es können die Reckbedingungen jedoch auch so gewählt werden, dass der Schrumpf in einer oder beiden Richtungen bei 120°C mehr als 15% beträgt.

Es ist ferner darauf hinzuweisen, dass im Falle der 7-schichtigen Struktur eine der Polypropylenschichten der Schichten B auch unter Verwendung von Polypropylenregenerat oder unter Verwendung von Polyolefinen, die sich von dem für die andere Schicht B verwendeten Polypropylen unterscheiden, hergestellt werden kann, und zwar in Abhängigkeit von der verwendeten Endverwendung.

Aufgrund der hervorragenden Barriereeigenschaften eignen sich die Folien für alle Verpackungszwecke, bei denen es darauf ankommt, dass die verpackte Ware keinen Aromaverlust erleidet und/oder dass keine Geruchsentwicklung durch die Verpackung hindurch erfolgt. Die geringe Sauerstoffdurchlässigkeit und die geringe Wasserdampfdurchlässigkeit der erfindungsgemäßen Folien sind so, dass sie für die meisten Verwendungen geeignet sind, für die derzeit die teureren mit PVOH- oder PVDC gecoateten BOPP-Folien verwendet werden müssen.

Besonders bevorzugte Verwendungen sind Verwendungen für die Verpackung von Lebensmitteln, beispielsweise frischen Lebensmitteln, Süßwaren und Konditoreiwaren. Auch für die Verpackung von anderen Waren, z.B. von Pharmazeutika, können die Folien verwendet werden. Aufgrund ihrer guten Optik können die Folien auch für alle Anwendungen eingesetzt werden, bei denen der Konsument transparente Barrierematerialien erwartet.

## Patentansprüche

1. Barrierefolie für Verpackungszwecke, insbesondere für die Verpackung von Lebens- und Genussmitteln, in Form einer Mehrschichtfolie, die mindestens fünfschichtig ist und einen Schichtaufbau B/C/D/C/B aufweist, wobei die beiden Schichten B Strukturschichten auf der Basis biaxial orientierter Polyolefine sind, die beiden Schichten C jeweils Haftvermittlerschichten auf der Basis modifizierter Polyolefine sind, und die Schicht D eine koextrudierte funktionale Barriereschicht ist, die aus Ethylen-Vinylalkohol-Copolymeren (EVOH) besteht,
**dadurch gekennzeichnet, dass** die Mehrschichtfolie durch simultanes Recken einer koextrudierten mehrschichtigen Primärfolie hergestellt ist, wobei das Ethylen-Vinylalkohol-Copolymere (EVOH) der Schicht D einen molaren Ethylengehalt von 40 mol% oder weniger aufweist und die Dicke der EVOH-Schicht weniger als 2 µm beträgt, wobei das Polyolefin wenigstens einer der Schichten B ein bei Temperaturen von 145 °C und darunter durch simultanes Recken biaxial orientiertes teilkristallines thermoplastisches Polypropylen und/oder modifiziertes Polypropylen ist und wobei die Werte für die Sauerstoffdurchlässigkeit bei 23°C und 75 % relative Luftfeuchtigkeit (OTR; ASTM 3985) niedriger sind als 5 cm³/m²dbar.

2. Folie nach Anspruch 1, **dadurch gekennzeichnet ist, dass** sie siebenschichtig ist und einen Schichtaufbau A/B/C/D/C/B/E aufweist, wobei die zusätzlichen Schichten A und E, die gleich oder verschieden sein können, funktionale Deckschichten aus modifizierten Polyolefinen für die Erzielung einer gewünschten Siegelfähigkeit, Haftungsverbesserung, gewünschter Reibungs- und Glanzwerte und/oder zur Gewährleistung einer Bedruck-, Beschreib-oder Metallisierbarkeit sind.

3. Folie nach einem der Ansprüche 1 oder 2, **dadurch gekennzeichnet, dass** das modifizierte Polyolefin der Haftvermittlerschichten C ein mit Maleinsäureanhydrid modifiziertes Polypropylen oder Polyethylen ist.

4. Folie nach einem der Ansprüche 1 bis 3, **dadurch gekennzeichnet, dass** die Haftvermittlerschichten C jeweils eine Dicke im Bereich von 0,1 bis 5µm aufweisen.

5. Folie nach einem der Ansprüche 1 bis 4, **dadurch gekennzeichnet, dass** das teilkristalline thermoplastische Polypropylen der Schicht(en) B ein modifiziertes Polypropylen auf der Basis eines isotaktischen Propylenhomopolymeren, Propylencopolymeren oder Propylenterpolymeren ist, das mindestens 80-98 Gew.-% Propyleneinheiten sowie einen entsprechenden Rest an Ethylen-und/oder Butyleneinheiten aufweist.

6. Folie nach Anspruch 5, **dadurch gekennzeichnet, dass** das Polypropylen der Schicht(en) B einen Modifizierer enthält, der ausgewählt ist aus ataktischem PP, syndiotaktischem PP, Kohlenwasserstoffharz, Ethylen-Propylen-Copolymeren, Propylen-Butylen-Copolymeren, Ethylen-Propylen-Butylen-Terpolymeren, Polybutylen, Regenerat-PP und Linear Low Density Polyethylene (PE-LLD) und deren Mischungen.

7. Folie nach einem der Ansprüche 1 bis 6, **dadurch gekennzeichnet, dass** mindestens eine der Schichten B zusätzlich vakuoleninitiierende Füllstoffe und/oder Pigmente enthält und eingefärbt oder opak ist.

8. Folie nach einem der Ansprüche Anspruch 1 bis 7, **dadurch gekennzeichnet, dass** die Dicke der Schichten B jeweils im Bereich von 3-35µm, vorzugsweise 3-15 µm, liegt.

9. Folie nach einem der Ansprüche 1 bis 8, **dadurch gekennzeichnet, dass** die Zugfestigkeit der Folie und ihr Elastizitätsmodul in Maschinenrichtung (MD) und ihre Reißdehnung in Querrichtung (TD) gleich oder höher sind als in TD bzw. MD.

10. Folie nach einem der Ansprüche 1 bis 9, **dadurch gekennzeichnet, dass** die Summe der E-Module in Längs- und Querrichtung 2000 N/mm², vorzugsweise 4000 N/mm² übersteigt.

11. Folie nach einem der Ansprüche 1 bis 10, **dadurch gekennzeichnet, dass** sie einen Glanz (Gloss; ASTM 2457) über 80 aufweist.

12. Folie nach einem der Ansprüche 1 bis 11, **dadurch gekennzeichnet, dass** sie eine füllstoff- und pigmentfreie Folie ist und eine Trübung (Trübung; ASTM 1003) unter 5% aufweist.

13. Folie nach einem der Ansprüche 1 bis 12, **dadurch gekennzeichnet, dass** sie eine Schrumpffolie ist und bei 120°C innerhalb vom 5 min einen Schrumpf von mindestens 10% in einer oder beiden Folienhauptrichtungen aufweist.

14. Folie nach einem der Ansprüche 1 bis 13, **dadurch gekennzeichnet, dass** die Dicke der Folie im Bereich von 4 bis 100 µm liegt.

15. Folie nach einem der Ansprüche 1 bis 14, **dadurch gekennzeichnet, dass** die Folie auf wenigstens einer Oberfläche metallisiert ist.

16. Verfahren zur Herstellung einer Barrierefolie für Verpackungszwecke nach einem der Ansprüche 1 bis 15, **dadurch gekennzeichnet, dass** man die die Schichten der Mehrschichtfolie bildenden Polymeren als Schmelzen aus der erforderlichen Anzahl von Breitschlitzdüsen auf eine Kühlwalze (Chill-Roll) koextrudiert und die gebildete Primär-Mehrschichtfolie einem berührungsfreien Recken einer Flachfolie auf einer simultanen Reckanlage mit Linearmotorbetrieb (LISIM^{®}) mit einer mindestens 10-fachen Flächenzunahme bei Recktemperaturen von 145°C oder darunter, vorzugsweise von 140°C oder darunter verstreckt, wobei Dehngeschwindigkeiten von mehr als 50 %/s, vorzugsweise von mehr als 300%/s zur Anwendung kommen.

17. Verfahren nach Anspruch 16, **dadurch gekennzeichnet, dass** die Primär-Mehrschichtfolie in Längs- und Querrichtung auf wenigstens das 3fache ihrer Anfangsabmessungen gereckt wird.

18. Verwendung einer Barrierefolie nach einem der Ansprüche 1 bis 15 als aroma-, geruchs- und sauerstoffdichte Verpackungsfolie für Lebens- und Genussmittel.

19. Verwendung einer Barrierefolie nach einem der Ansprüche 1 bis 15 als Deckelfolie.

## Claims

1. Barrier film for use in packaging, in particular for the packaging of foods and luxury foods, in the form of a multi-layer film which comprises at least five layers and has a layer structure B/C/D/C/B, the two layers B being structural layers based on biaxially oriented polyolefins, the two layers C each being adhesion promoter layers based on modified polyolefins and layer D being a coextruded functional barrier layer consisting of ethylene vinylalcohol copolymers (EVOH), **characterised in that** the multi-layer film is produced by simultaneous stretching of a coextruded multi-layer primary film, the ethylene vinylalcohol copolymer (EVOH) of layer D having a molar ethylene content of 40 mol% or less and the thickness of the EVOH layer being less than 2 µm, the polyolefin of at least one of the layers B being a semicrystalline thermoplastic polypropylene which is biaxially oriented by simultaneous stretching at temperatures of 145°C and below and/or modified polypropylene, and the values for the oxygen transmission rate at 23°C and 75 % relative humidity (OTR; ASTM 3985) being lower than 5 cm³/m²dbar.

2. Film according to claim 1, **characterised in that** it comprises seven layers and has a layer structure A/B/C/D/C/B/E, the additional layers A and E, which may be the same or different, being functional cover layers made of modified polyolefins for achieving a desired sealing capacity, an improvement in adhesion, desired friction and gloss values and/or for allowing printing, writing or metal-coating.

3. Film according to either claim 1 or claim 2, **characterised in that** the modified polyolefin of the adhesion promoter layers C is a polypropylene or polyethylene modified by maleic anhydride.

4. Film according to any one of claims 1 to 3, **characterised in that** the adhesion promoter layers C each have a thickness in the range of 0.1 to 5 µm.

5. Film according to any one of claims 1 to 4, **characterised in that** the semicrystalline thermoplastic polypropylene of the layer(s) B is a modified polypropylene which is based on an isotactic propylene homopolymer, propylene copolymer or propylene terpolymer and preferably comprises at least 80 to 98 % by weight propylene units and a corresponding remainder of ethylene and/or butylene units.

6. Film according to claim 5, **characterised in that** the polypropylene of the layer(s) B contains a modifier selected from atactic PP, syndiotactic PP, hydrocarbon resin, ethylene-propylene copolymers, propylene-butylene copolymers, ethylenepropylene-butylene terpolymers, polybutylene, regenerated PP and linear low-density polyethylene (PE-LLD) and mixtures thereof.

7. Film according to any one of claims 1 to 6, **characterised in that** at least one of the layers B additionally contains vacuole-initiating fillers and/or pigments and is coloured or opaque.

8. Film according to any one of claims 1 to 7, **characterised in that** the thickness of each the layers B is in the range of 3 to 35 µm, preferably 3 to 15 µm.

9. Film according to any one of claims 1 to 8, **characterised in that** the tensile strength of the film and its modulus of elasticity in the machine direction (MD) and its elongation at tear in the transverse direction (TD) are the same as or greater than in the TD and MD respectively.

10. Film according to any one of claims 1 to 9, **characterised in that** the sum of the moduli of elasticity in the longitudinal and transverse directions exceeds 2000 N/mm², preferably 4000 N/mm².

11. Film according to any one of claims 1 to 10, **characterised in that** it has a gloss (gloss; ASTM 2457) of more than 80.

12. Film according to any one of claims 1 to 11, **characterised in that** it is a film containing no fillers or pigments and has a turbidity (turbidity; ASTM 1003) of less than 5 %.

13. Film according to any one of claims 1 to 12, **characterised in that** it is a shrink film and exhibits shrinkage of at least 10 %, in one or both main directions of the film, within 5 min at 120°C.

14. Film according to any one of claims 1 to 13, **characterised in that** the thickness of the film is in the range of 4 to 100 µm.

15. Film according to any one of claims 1 to 14, **characterised in that** the film is metalcoated on at least one surface.

16. Method for producing a barrier film for use in packaging according to any one of claims 1 to 15, **characterised in that** the polymers forming the layers of the multi-layer film are coextruded as melts from the requisite number of slot dies onto a chili roll and the primary multi-layer film which is formed is subjected to contactless stretching of a flat film on a simultaneous stretching unit with linear motor operation (LISIM®), with an increase in surface area of at least ten times at stretching temperatures of 145°C or below, preferably of 140°C or below, strain rates of more than 50 %/s, preferably of more than 300 %/s, being applied.

17. Method according to claim 16, **characterised in that** the primary multi-layer film is stretched in the longitudinal and transverse directions to at least three times its initial dimensions.

18. Use of a barrier film according to any one of claims 1 to 15, as an aroma, odour and oxygen-tight packaging film for foods and luxury foods.

19. Use of a barrier film according to any one of claims 1 to 15 as a cover film.

## Revendications

1. Feuille-barrière pour des applications à l'emballage, en particulier pour l'emballage de produits alimentaires et de produits d'agrément, sous la forme d'une feuille multicouches qui comprend au moins cinq couches avec une structure de couches B/C/D/C/B, dans laquelle les deux couches B sont des couches structurelles basées sur des polyoléfines à orientation biaxiale, les deux couches C sont respectivement des couches d'adhésif à base de polyoléfine modifiée, et la couche D est une couche-barrière fonctionnelle coextrudée qui est composée de copolymères éthylène-alcool vinylique (EVOH),
**caractérisée en ce que** la feuille multicouches est produite par étirage simultané d'une feuille primaire multicouches coextrudée, dans laquelle le copolymère éthylène-alcool vinylique (EVOH) de la couche B contient une teneur molaire d'éthylène de 40 moles % ou moins, l'épaisseur de la couche EVOH s'élève à moins de 2µm, dans laquelle la polyoléfine de l'une au moins des couches B est du polypropylène thermoplastique partiellement cristallin et/ou du polypropylène modifié, à orientation biaxiale par étirage simultané à des températures de 145°C ou moins, et les valeurs pour la perméabilité à l'oxygène à 23°C et 75 % d'humidité relative dans l'air (OTR ; ASTM 3985) sont inférieures à 5 cm³/m²dbar.

2. Feuille selon la revendication 1, **caractérisée en ce qu'**elle comprend sept couches et présente une structure de couches AB/C/D/C/B/E, dans laquelle les couches supplémentaires A et E, qui peuvent être identiques ou différentes, sont des couches de recouvrement fonctionnelles en polyoléfine modifiée pour atteindre une capacité de scellement souhaitée, une amélioration de l'adhésion, des valeurs de friction et de luisance souhaitées et/ou pour garantir une capacité à recevoir des impressions, des inscriptions ou une métallisation.

3. Feuille selon l'une des revendications 1 ou 2, **caractérisée en ce que** la polyoléfine modifiée des couches d'adhésif C est un polypropylène ou un polyéthylène modifié à l'anhydride d'acide maléique.

4. Feuille selon l'une des revendications 1 à 3, **caractérisée en ce que** les couches d'adhésif C présentent respectivement une épaisseur dans la plage de 0,1 à 5 µm.

5. Feuille selon l'une des revendications 1 à 4, **caractérisée en ce que** le propylène thermoplastique partiellement cristallin des couches B est un polypropylène modifié à base d'un homopolymère de propylène, copolymère de propylène ou terpolymère de propylène isotactique, qui contient au moins 80 à 98 % en poids d'unités polypropylène ainsi qu'un reste correspondant d'unités éthylène et/ou butylène.

6. Feuille selon la revendication 5, **caractérisée en ce que** le polypropylène de la (des) couche(s) B contient un modifiant choisi parmi PP atactique, PP syndiotactique, résine d'hydrocarbure, copolymère éthylène-propylène, copolymère propylène-butylène, terpolymère éthylène-propylène-butylène, poly butyle, PP régénéré et polyéthylène linéaire à base densité (PE-LLD) et leurs mélanges.

7. Feuille selon l'une des revendications 1 à 6, **caractérisée en ce que** l'une au moins des couches B contient additionnellement des agents de remplissage amorçant des vacuoles et/ou des pigments et est colorée ou opaque.

8. Feuille selon l'une des revendications 1 à 7, **caractérisée en ce que** l'épaisseur des couches B est respectivement dans la plage de 3 à 35 µm, de préférence 3 à 15 µm.

9. Feuille selon l'une des revendications 1 à 8, **caractérisée en ce que** la résistance à la traction de la feuille et son module d'élasticité dans la direction de la machine (MD), et son allongement à la rupture en direction transversale (TD) sont égaux ou supérieurs à ceux dans la direction transversale TD ou respectivement dans la direction de la machine MD.

10. Feuille selon l'une des revendications 1 à 9, **caractérisée en ce que** la somme des modules d'élasticité en direction longitudinale et en direction transversale dépasse 2000 N/mm², de préférence 4000 N/mm².

11. Feuille selon l'une des revendications 1 à 10, **caractérisée en ce qu'**elle présente une luisance (Gloss ; ASTM 2457) supérieure à 80.

12. Feuille selon l'une des revendications 1 à 11, **caractérisée en ce qu'**elle est une feuille dépourvue de matières de remplissage et de pigments et présente une turbidité (turbidité ; ASTM 1003) inférieure à 5%.

13. Feuille selon l'une des revendications 1 à 12, **caractérisée en ce qu'**elle est une feuille thermorétractable et présente à 120°C en 5 minutes une rétraction d'au moins 10 % dans l'une des directions principales de la feuille ou les deux.

14. Feuille selon l'une des revendications 1 à 13, **caractérisée en ce que** l'épaisseur de la feuille est dans la plage de 4 à 100 µm.

15. Feuille selon l'une des revendications 1 à 14, **caractérisée en ce que** la feuille est métallisée sur au moins une surface.

16. Procédé pour la fabrication d'une feuille-barrière destinée à des applications à l'emballage, selon l'une des revendications 1 à 15, **caractérisé en ce que** l'on procède à une coextrusion des polymères formant les couches de la feuille multicouches sous forme de masse en fusion à partir de tuyères à fente large en un nombre nécessaire sur un cylindre de refroidissement (Chill-Roll), et l'on étire la feuille multicouches primaire ainsi formée sous forme d'un étirage d'une feuille plane dans une installation d'étirage simultané sans contact avec entraînement par moteur linéaire (LISIM®) avec augmentation de surface d'au moins 10 fois à des températures d'étirage de 145°C ou moins, de préférence 140°C ou moins, en utilisant des vitesses d'allongement supérieures à 50 %/s, de préférence supérieures à 300 %/s.

17. Procédé selon la revendication 16, **caractérisé en ce que** la feuille multicouches primaire est étirée en direction longitudinale et en direction transversale à au moins trois fois ses dimensions initiales.

18. Utilisation d'une feuille-barrière selon l'une des revendications 1 à 15 à titre de feuille d'emballage étanche vis-à-vis des arômes, des odeurs et de l'oxygène pour des produits alimentaires et des produits d'agrément.

19. Utilisation d'une feuille-barrière selon l'une des revendications 1 à 15 à titre de feuille-couvercle.
